(19) Europäisches Patentamt / European Patent Office / Office européen des brevets

(11) **EP 3 724 143 B1**

(12) **FASCICULE DE BREVET EUROPEEN**

(45) Date de publication et mention de la délivrance du brevet:
**15.06.2022  Bulletin 2022/24**

(21) Numéro de dépôt: **18830910.8**

(22) Date de dépôt: **04.12.2018**

(51) Classification Internationale des Brevets (IPC):
***C03C 25/36*** *(2006.01)*    ***C08L 63/00*** *(2006.01)*

(52) Classification Coopérative des Brevets (CPC):
**C03C 25/36; C08G 59/32; C08G 59/42; C08G 59/60; C08G 59/686**

(86) Numéro de dépôt international:
**PCT/FR2018/053104**

(87) Numéro de publication internationale:
**WO 2019/115912 (20.06.2019 Gazette 2019/25)**

(54) **PRODUIT ISOLANT COMPRENANT DES FIBRES MINÉRALES ET UN LIANT**

ISOLIERPRODUKT AUS MINERALFASERN UND EINEM BINDEMITTEL

INSULATION PRODUCT COMPRISING MINERAL FIBERS AND A BINDER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **11.12.2017   FR 1761933**

(43) Date de publication de la demande:
**21.10.2020   Bulletin 2020/43**

(73) Titulaire: **SAINT-GOBAIN ISOVER**
**92400 Courbevoie (FR)**

(72) Inventeurs:
• **SALOMON, Pierre**
**92400 COURBEVOIE (FR)**
• **SLOOTMAN, Juliette**
**75116 PARIS (FR)**

(74) Mandataire: **Saint-Gobain Recherche**
**Département Propriété Industrielle**
**39 Quai Lucien Lefranc**
**93300 Aubervilliers (FR)**

(56) Documents cités:
WO-A1-2015/033084    WO-A2-03/104284
GB-A- 1 210 098

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un produit isolant, notamment thermique ou acoustique, comprenant des fibres minérales et un liant obtenu par durcissement et/ou réticulation d'une composition d'encollage contenant un précurseur époxy et un durcisseur. L'invention concerne également une composition aqueuse d'encollage et un procédé de préparation du produit isolant.

Les fibres minérales peuvent être des fibres de verre ou de roche.

Les produits isolants peuvent être sous forme de laine minérale, de feutre ou de voile comprenant des fils de verre.

Les produits isolants sont de préférence sous forme de laine minérale. La laine minérale comprend des fibres minérales enchevêtrées éventuellement liées par un liant. Ces fibres sont généralement obtenues par des procédés de centrifugation, soit interne (dans un organe nomme assiette), soit externe (sur des organes nommes rotors) associée à un étirage par un courant gazeux à plus ou moins haute température. Elles peuvent également être obtenues par des procédés essentiellement aérauliques, d'étirage par des courants gazeux d'une matière minérale fondue issue d'une filière. Les fibres de laine minérale sont discontinues par opposition aux fibres de verre dites textiles issues de filaments continument étirés sous une filière.

Des feutres minces aux propriétés d'isolation acoustique ou de filtration, peuvent également être obtenus avec ces procédés à fibres discontinues.

Les voiles comprenant des fils de verre peuvent être des voiles tissés ou non tissés. Les fils de verre comprennent des fibres de verre issues de fils continus (ou filaments de verre), le cas échéant coupés et transformés. Ces fibres sont obtenues par un procédé de filage par étirement dans lequel le verre en fusion se transforme en filament en étant étiré à grande vitesse.

La fabrication de produits isolants à base de laine minérale comprend généralement :

- une étape de fabrication des fibres de verre ou de roche, par exemple par un procédé de centrifugation,
- une étape d'application d'une composition aqueuse d'encollage,
- une étape de collecte de fibres sur un tapis de façon à former une nappe ou un matelas,
- une étape de thermodurcissement à des températures supérieures à 100 °C dans un dispositif de chauffage approprié tel qu'une étuve.

La composition aqueuse d'encollage est vaporisée sur les fibres encore chaudes au niveau de l'organe de fibrage et/ou pendant leur trajet entre le dispositif de fibrage et le tapis de collecte des fibres.

Le produit isolant résultant comprend de la laine minérale dont les fibres sont liées entre elles par un liant obtenu par durcissement des composants de la composition d'encollage. Le liant doit adhérer correctement aux fibres et se répartir de manière homogène pour ensuite se retrouver préférentiellement aux points de jonction entre les fibres. La composition d'encollage est donc de préférence pulvérisée lorsque les fibres sont encore unitaires. En conséquence, la pulvérisation est réalisée dans une hotte de réception des fibres, en dessous de brûleurs générant un courant gazeux d'étirage. Il en résulte une interdiction d'utiliser des composés organiques inflammables et/ou polluants, le risque d'incendie et/ou de pollution dans la hotte de réception étant trop important.

De plus, la composition aqueuse d'encollage subit des dilutions successives avant d'être appliquée sur les fibres. Ces composants doivent pouvoir être répartis uniformément au sein de la composition d'encollage peu importe le niveau de dilution et d'agitation.

Les résines phénoliques traditionnellement utilisées en tant que liants sont remplacées de plus en plus par des produits n'émettant pas, ou très peu, de formaldéhyde, composé considéré comme pouvant nuire à la santé humaine.

La demanderesse a proposé dans ses demandes EP 0 369 848, WO 2004/007395 et WO 2005/044750 des compositions d'encollage comprenant un durcisseur aminé et des résines à base de précurseurs époxy choisis parmi les éthers polyglycidyliques.

Le précurseur époxy et le durcisseur ne doivent pas réagir avant application sur les fibres et mise en forme du produit isolant. Cela signifie que la pré-réticulation doit être aussi faible que possible. En effet, si le précurseur époxy et le durcisseur polymérisent dans les cuves de stockage ou au niveau des couronnes de pulvérisation cela génère un nettoyage fastidieux mais surtout l'arrêt de la production.

De préférence, le précurseur époxy et le durcisseur ne doivent pas réagir après pulvérisation et avant collecte des fibres sous forme de matelas. De manière encore plus préférée, le précurseur époxy et le durcisseur ne doivent pas réagir avant passage dans le dispositif de chauffage approprié. Enfin, le précurseur époxy et le durcisseur doivent réagir rapidement lors de la réaction de thermodurcissement dans le dispositif de chauffage.

Il est donc nécessaire de contrôler parfaitement le début et la vitesse de polymérisation. On évite ainsi les risques de pré-réticulation et on permet que la durée de polymérisation reste compatible avec des vitesses de production élevées, notamment en faisant en sorte que le liant soit complètement durci après le traitement dans l'étuve à haute

temperature.

Les résines divulguées dans les demandes EP 0 369 848, WO 2004/007395 et WO 2005/044750 sont dispersables ou susceptibles d'être mises en émulsion en présence d'un agent émulsifiant ou d'un agent dispersant. Les seules résines exemplifiées dans ces demandes sont des éthers polyglycidyliques obtenus par condensation d'épichlorhydrine et de bisphénol. WO 03/104284 A2 décrit une composition d'encollage aqueuse pour la fabrication de produits d'isolation en fibres de verre, comprenant une solution aqueuse d'un mélange : a) d'un époxyde et b) d'un agent de réticulation de l'époxy. GB 1 210 098 A décrit une composition d'encollage pour des fibres minérales comprenant une dispersion aqueuse d'un mélange : i) d'au moins un composé ayant au moins deux fonctions époxy obtenu par condensation de l'épichlorhydrine avec un polyphénol; le composé obtenu est par conséquent uniquement à base de composés aromatiques, ii) et un alcool polyvinylique partiellement estérifié ou éthérifié. WO 2015/033084 A1 décrit des sucres qui sont connus pour leur utilisation en tant que liant liant pour fibres.

L'utilisation de résines obtenues à partir de composés suspectés d'être des perturbateurs endocriniens tels que le bisphenol ne donne pas entière satisfaction.

De plus, les résines à base d'éthers polyglycidyliques de bisphenol ne sont pas solubles dans l'eau. Ces résines sont utilisées dans les compositions d'encollages sous forme d'émulsion. Or, l'utilisation d'émulsion dans un procédé industriel comprenant des étapes de dilution à grande échelle et des étapes d'injection à haute température peut être problématique. En effet, il est nécessaire de garantir la stabilité de l'émulsion à chaque étape du procédé pour garantir la reproductibilité des produits isolants résultants.

Les durcisseurs utilisés dans la demande WO 2005/044750 sont des polyamines aliphatiques telles que la diéthylènetriamine (DETA), la triéthylènetétramine (TETA), la tétraéthylènepentamine (TEPA). Ces composés sont susceptibles de réagir significativement à des températures inférieures à 100 °C, voire à température ambiante avec certains précurseurs époxy. De plus, la réaction étant exothermique, la probabilité de réaction entre durcisseur et précurseur époxy une fois la réaction amorcée augmente exponentiellement.

Les compositions d'encollage de l'art antérieur comprenant une résine époxy sous forme d'émulsion et de tels durcisseurs aminés satisfont les critères de polymérisation, à savoir, non polymérisation avant pulvérisation et polymérisation après pulvérisation dans la hotte de réception des fibres, car les résines sont sous forme d'émulsion. Les fonctions époxy ne sont pas directement accessibles tant que l'émulsion reste stable. En revanche, dès l'injection et donc évaporation de l'eau, les fonctions réactives du durcisseur et les fonctions époxy de la résine peuvent réagir ensemble. La réactivité des durcisseurs aminés vis-à-vis des fonctions époxy permet un durcissement rapide compatible avec les cadences industrielles. Cependant, la réaction débute généralement dès pulvérisation et non pendant l'étape de durcissement dans le dispositif de chauffage approprié.

Il existe un besoin de développer des nouvelles compositions d'encollage à base de résines époxy qui ne présentent pas les inconvénients de l'art antérieur.

L'invention se propose de fournir une composition d'encollage dont :

- les précurseurs époxy ne sont pas obtenus à partir de composés suspectés d'être des perturbateurs endocriniens tels que les bisphénols, et/ou
- certains ou tous les composés sont issus ou élaborés à partir de produits naturels (bio-sourcés), et/ou
- les précurseurs époxy sont parfaitement solubles ou miscibles dans l'eau et donc ne sont pas sous forme d'émulsion dans la composition d'encollage, et/ou
- la composition d'encollage ne polymérise pas ou très peu avant injection dans la hotte de réception des fibres, c'est-à-dire :

    pendant un temps suffisant correspondant aux durées normales de stockage dans les cuves avant injection, notamment pendant plusieurs heures, et
    aux températures susceptibles d'être atteintes durant ces étapes de stockage et d'injection, et/ou

- la composition d'encollage ne polymérise pas ou très peu avant passage dans le dispositif de chauffage approprié, et/ou
- la composition d'encollage polymérise rapidement au moment du passage dans le dispositif de chauffage approprié.

L'invention concerne un produit isolant comprenant des fibres minérales et un liant obtenu par durcissement d'une composition d'encollage comprenant comme composants :

a) des composés comprenant au moins une fonction époxy dont au moins un précurseur époxy choisi parmi les composés aliphatiques comprenant au moins deux fonctions époxy, les composés aliphatiques comprenant au moins deux fonctions époxy représentent au moins 50 % du poids total des composés comprenant au moins une fonction époxy de la composition d'encollage,

b) un durcisseur choisi parmi les composés comprenant au moins deux fonctions réactives choisies parmi les fonctions hydroxyle et acide carboxylique, la ou les fonctions acides carboxyliques pouvant être sous forme de sel ou d'anhydride.

L'invention concerne également une composition d'encollage aqueuse pour produits isolants à base de fibres minérales comprenant comme composants autres que l'eau :

a) des composés comprenant au moins une fonction époxy dont au moins un précurseur époxy choisi parmi les composés aliphatiques comprenant au moins deux fonctions époxy, les composés aliphatiques comprenant au moins deux fonctions époxy représentent au moins 50 % du poids total des composés comprenant au moins une fonction époxy de la composition d'encollage,
b) un durcisseur choisi parmi les composés comprenant au moins deux fonctions réactives choisies parmi les fonctions hydroxyle et acide carboxylique, la ou les fonctions acides carboxyliques pouvant être sous forme de sel ou d'anhydride.

L'invention concerne également un procédé de fabrication d'un produit isolant comprenant des fibres minérales et un liant selon lequel :

- on applique une composition aqueuse d'encollage selon l'invention sur les fibres minérales,
- on forme un liant par durcissement thermique des composants non volatils de la composition d'encollage.

De telles compositions d'encollage sont simples à préparer, stables, fortement diluables et présentent des conditions de durcissement compatibles avec les applications visées.

Dans la suite de la description, les caractéristiques décrites s'appliquent indifféremment à la composition d'encollage, au produit d'isolation et au procédé de fabrication du produit d'isolation.

Le demandeur a découvert que certains précurseurs époxy selon l'invention, obtenus à partir des composés aliphatiques, contrairement aux précurseurs époxy obtenus à partir de composés aromatiques de type bisphénols, sont complétement solubles de l'eau. Contrairement aux émulsions, les solutions sont plus simples à préparer et leur utilisation pose peu de problème. On s'affranchit de tous problèmes liés à la stabilité des émulsions.

Toutefois, l'utilisation de certains durcisseurs aminés n'est dans ce cas pas envisageable de par leur trop grande réactivité vis-à-vis des fonctions époxy des précurseurs. Ces fonctions sont directement accessibles car elles ne sont alors plus « protégées » par l'émulsion.

La demande WO 2005/044750 précédemment citée précise que le précurseur époxy peut être choisi parmi les résines résultant de la réaction entre l'épichlorhydrine et le bisphénol A, le bisphénol F, les polyéthylèneglycols, le glycérol, le pentaérythritol et les résines novolaques et les mélanges de ces résines. Les résines formées par réaction entre l'épichlorhydrine et le bisphénol A sont particulièrement préférées et seules exemplifiées. La demande WO 2005/044750 précise également que d'autres composés époxy tels que des composés aliphatiques époxydés peuvent être utilisés. La teneur de ces composés représente généralement moins de 30 %, de préférence moins de 10 % du poids de la résine époxy.

Aucun exemple n'illustre de composition d'encollage comprenant des composés aliphatiques époxydés. La demande WO 2005/044750 ne divulgue pas une composition d'encollage comprenant, par rapport au poids total des composés comprenant au moins une fonction époxy présents dans la composition d'encollage, au moins 50 % en poids de composés aliphatiques comprenant au moins deux fonctions époxy.

Les conditions de polymérisation, début et vitesse de polymérisation, d'une composition d'encollage comprenant comme précurseur époxy des éthers polyglycidyliques de composés aliphatiques en solution et comme durcisseur des polyamines aliphatiques ne sont pas contrôlables dans les conditions de l'application visée. En effet, ces composés sont susceptibles de réagir avant injection dans la hotte de réception des fibres. En effet, la température de réticulation est inférieure à 90 °C, voire proche de la température ambiante pour les polyamines les plus réactives. Le risque de polymérisation dans les cuves de stockage ou dans les couronnes d'injection est trop élevé. De plus, le risque de réticulation avant application sur les fibres augmente le risque d'obtenir des produits isolants de qualité variable.

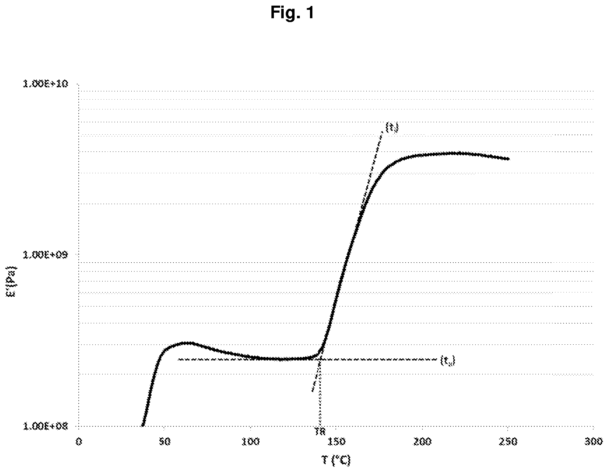

Selon l'invention, la température de réticulation est déterminée par analyse mécanique dynamique (DMA). La DMA permet de déterminer le caractère viscoélastique d'un polymère. Un filtre de microfibres est imprégné avec la composition d'encollage et maintenu horizontalement entre des mors fixes. Un élément oscillant appliqué sur la face supérieure de l'échantillon, muni d'un dispositif de mesure de la contrainte en fonction de la déformation appliquée, permet de calculer le module d'élasticité E'. Le papier filtre imprégné est chauffé à 250°C, partant de 25°C à la vitesse de 4°C/min. A partir des mesures, on établit la courbe de variation du module d'élasticité E' (en Pa) en fonction de la température (en °C). Une telle courbe est représentée sur la figure 1. On trace ensuite les tangentes au plateau avant réticulation ($t_p$) et au point d'inflexion ($t_i$). La température de réticulation (TR) correspond à la température l'intersection des tangentes au plateau avant réticulation ($t_p$) et au point d'inflexion ($t_i$).

Pour ces mesures, les compositions aqueuses d'encollage déposées sur le filtre présentent une teneur matières solides de 10 à 50 %, de préférence d'environ 30 %.

La composition d'encollage selon l'invention présente, par ordre de préférence croissant une température de réticulation supérieure ou égale à 90°C, supérieure à 100 °C, supérieure à 110°C ou comprise entre 90 et 200°C. Cela signifie que les composants (a) et (b) présentent, par ordre de préférence croissant, une température de réticulation déterminée par analyse mécanique dynamique avec une vitesse de chauffage de 4°C/min supérieure ou égale à 90°C, supérieure à 100 °C, supérieure à 110°C ou comprise entre 90 et 200°C.

La réaction de réticulation ou durcissement peut être exothermique.

Les durcisseurs utilisés selon l'invention, notamment de type acide polycarboxylique ou polyol, réagissent sélectivement en fonction de la température avec les précurseurs époxy comprenant des composés aliphatiques. En effet, on observe :

- une quasi inertie lorsque la température est inférieure à une température seuil, ladite température seuil permettant l'injection dans la hotte de réception des fibres sans durcissement,
- une grande réactivité dès que la température seuil est atteinte permettant une réticulation rapide.

La température seuil et la cinétique de réticulation sont donc compatibles avec le procédé de fabrication de produits isolant à base de laine minérale.

Par conséquent, l'invention fournit avantageusement une composition d'encollage dont le précurseur époxy peut être en solution et non en émulsion grâce au choix d'un durcisseur réagissant sélectivement qu'après injection dans la hotte de réception des fibres et de préférence uniquement dans le dispositif de chauffage.

De préférence, la composition aqueuse d'encollage est sous forme de solution. Cela signifie que tous les composants de la composition sont solubles dans l'eau.

La composition d'encollage comprend au moins un précurseur époxy choisi parmi les composés aliphatiques comprenant au moins deux fonctions époxy.

Selon l'invention, on entend par « composé aliphatique », un composé qui ne comprend pas de groupement aromatique. Un composé aliphatique est un composé organique carboné comprenant éventuellement d'autres atomes tels que de l'oxygène, de l'azote ou du soufre, acyclique ou cyclique, linéaire ou branché, saturé ou insaturé, à l'exclusion des composés aromatiques.

Le précurseur époxy à base de composé aliphatique comprenant au moins deux fonctions époxy a une valeur ÉEW (Epoxy Equivalent Weight) comprise entre 50 et 1000, de préférence entre 100 et 300. Le poids équivalent d'époxydes (EE) est la quantité de précurseurs époxy en grammes contenant un équivalent d'époxydes.

De préférence, les précurseurs époxy peuvent être bio-sourcés.

De préférence, les précurseurs époxy sont solubles ou miscibles dans l'eau. Cela signifie que le mélange du précurseur époxy et de l'eau est sous forme d'une solution homogène par opposition à une dispersion ou mélange hétérogène telle qu'une émulsion. Cela signifie que le mélange du précurseur époxy et de l'eau est exempt d'agents tensio-actifs. Ainsi, les précurseurs époxy selon l'invention peuvent être exempts d'agents tensio-actifs.

Les composés aliphatiques comprenant au moins deux fonctions époxy représentent, en poids du poids total des composés comprenant au moins une fonction époxy de la composition d'encollage, par ordre de préférence croissant, au moins 50 %, au moins 60 %, au moins 70 %, au moins 80 %, au moins 90 %. Dans ce cas, le terme « composé comprenant au moins une fonction époxy », sans autre indication, inclut les composés aliphatiques ou aromatiques comprenant au moins une fonction époxy.

Les composés aliphatiques comprenant au moins deux fonctions époxy représentent, en poids du poids total des précurseurs époxy comprenant au moins deux fonctions époxy, par ordre de préférence croissant, au moins 50 %, au moins 60 %, au moins 70 %, au moins 80 %, au moins 90 %, au moins 95 %, au moins 98 %, 100 %. Dans ce cas, le terme précurseur époxy comprenant au moins deux fonctions époxy, sans autre indication, inclut les composés aliphatiques ou aromatiques comprenant au moins deux fonctions époxy.

Le précurseur époxy à base de composé aliphatique comprenant au moins deux fonctions époxy peut être:

- un éther polyglycidylique d'un polyol aliphatique,
- un composé poly-époxy aliphatique obtenu par oxydation d'un composé aliphatique comprenant au moins deux doubles liaisons.

L'éther polyglycidylique de polyol aliphatique peut être obtenu par réaction d'épichlorhydrine avec un polyol aliphatique. L'épichlorhydrine et le polyol aliphatique peuvent être biosourcés.

Le polyol aliphatique peut être choisi parmi :

- le glycérol,
- les polyglycérols,
- l'inositol,
- les sucres hydrogénés (tels que l'érythritol, l'arabitol, le xylitol, le sorbitol, le talitol, le mannitol, l'iditol, le maltitol, l'isomaltitol, le lactitol, le cellobitol, le palatinitol, le maltotriitol),
- le sorbitane et l'isosorbide,
- le butanediol et le propanediol,
- les hydrolysats d'amidon et les produits d'hydrogénation d'un hydrolysat d'amidon,
- les hydrolysats d'hémicellulose et les produits d'hydrogénation d'un hydrolysat d'hémicellulose,
- les polyols obtenus par fonctionnalisation d'une huile végétale,
- le saccarose,
- les sucres réducteurs tels que le glucose, le fructose, le maltose, le lactose, l'isomalt,
- le triméthylol propane, le pentaérythritol, le neopentylglycol.

Le polyol peut être obtenu par hydrogénation d'hydrates de carbone de formule $C_n(H_2O)_p$, ou sucres réducteurs, présentant au moins un groupe aldéhyde ou cétone (groupe réducteur). Ces produits appelés sucres hydrogénés ou alcools de sucres comprennent l'ensemble des produits résultant de la réduction d'un saccharide choisi parmi les monosaccharides, disaccharides, oligosaccharides et polysaccharides et des mélanges de ces produits.

Le polyol peut être un produit d'hydrogénation d'un hydrolysat d'amidon ou d'hémicellulose. L'amidon et l'hémicellulose sont des polysaccharides. Les hydrolysats d'amidon et d'hémicellulose sont des produits obtenus par hydrolyse enzymatique et/ou acide d'amidon ou d'hémicellulose.

Pour les hydrolysats d'amidon, le degré d'hydrolyse est généralement caractérisé par l'équivalent dextrose (DE), défini par la relation suivante :

$$DE = 100 \times \left( \frac{\text{nombre de liaisons glycosidiques rompues}}{\text{nombre de liaisons glycosidiques dans l'amidon initial}} \right)$$

Les hydrolysats d'amidon préférés ont, avant l'étape d'hydrogénation, un DE compris entre 5 et 99, et avantageusement entre 10 et 80.

L'hydrogénation du saccharide peut être effectuée par les méthodes connues opérant dans des conditions de pression d'hydrogène et de température élevées, en présence d'un catalyseur choisi parmi les éléments des groupes IB, IIB, IVB, VI, VII et VIII du tableau périodique des éléments, de préférence dans le groupe comprenant le nickel, le platine, le palladium, le cobalt, le molybdène et leurs mélanges. Le catalyseur préféré est le nickel de Raney. L'hydrogénation transforme le sucre ou le mélange de sucres (hydrolysat d'amidon) en polyols ou alcools de sucre.

Les hémicelluloses comprennent les polyosides suivants : xylane, glucuronoxylane, arabinoxylane, glucomannane et xyloglucane.

A titre d'exemple de polyols aliphatiques choisis parmi des sucres hydrogénés, on peut citer l'érythritol, l'arabitol, le xylitol, le sorbitol, le mannitol, l'iditol, le maltitol, l'isomaltitol, le lactitol, le cellobitol, le palatinitol, le maltotritol, les produits d'hydrogénation d'hydrolysats d'amidon et les produits d'hydrogénation d'hydrolysats d'hémicellulose.

L'éther polyglycidylique d'un polyol aliphatique peut être choisi parmi : un éther polyglycidylique de glycérol, un éther polyglycidylique de polyglycérol, un éther polyglycidylique d'inositol, un éther polyglycidylique d'érythritol, un éther polyglycidylique d'arabitol, un éther polyglycidylique de xylitol, un éther polyglycidylique de talitol, un éther polyglycidylique de sorbitol, un éther polyglycidylique de mannitol, un éther polyglycidylique d'iditol, un éther polyglycidylique de maltitol, un éther polyglycidylique d'isomaltitol, un éther polyglycidylique de lactitol, un éther polyglycidylique de cellobitol, un éther polyglycidylique de palatinitol, un éther polyglycidylique de maltotriitol, un éther polyglycidylique d'isosorbide, un éther polyglycidylique de sorbitane, un éther polyglycidylique de butanediol, un éther polyglycidylique de propanediol, un éther polyglycidylique de saccarose, un éther polyglycidylique de glucose, un éther polyglycidylique de fructose, un éther polyglycidylique de maltose, un éther polyglycidylique de lactose, un éther polyglycidylique d'isomalt, un éther polyglycidylique de triméthylol propane, un éther polyglycidylique de penta érythritol, un éther polyglycidylique de néopentylglycol.

L'éther polyglycidylique d'un polyol aliphatique peut être choisi parmi un éther polyglycidylique des produits d'hydrogénation d'hydrolysats d'amidon ou d'hémicellulose.

Le polyol peut être obtenu par fonctionnalisation d'une huile végétale. Les huiles végétales sont composées en grande majorité de triglycérides dans lesquels les trois groupements hydroxyles du glycérol sont estérifiés par des acides gras. Les acides gras peuvent être insaturés et/ou comporter des fonctions hydroxyles.

Pour obtenir un polyol à partir d'une huile végétale, il est par exemple possible de réaliser l'époxydation suivie de l'hydrolyse d'au moins deux doubles liaisons d'un acide gras insaturé.

Une autre possibilité consiste à utiliser une huile végétale comprenant des acides gras comprenant une fonction alcool et au moins une double liaison. Le polyol est obtenu en réalisant l'époxydation suivie de l'hydrolyse d'au moins une double liaison.

L'éther polyglycidylique d'un polyol aliphatique peut être choisi parmi un éther polyglycidylique d'un polyol obtenu par fonctionnalisation d'une huile végétale.

Le précurseur époxy comprenant au moins deux fonctions époxy peut être choisi parmi un composé poly-époxy aliphatique obtenu par oxydation, de type époxydation d'une double liaison, d'un composé comprenant au moins deux doubles liaisons. Le composé comprenant au moins deux doubles liaisons peut être choisi parmi un acide gras, un ester d'acide gras, un furanne ou un terpène.

La méthode la plus couramment employée pour époxyder une double liaison met en jeu l'acide peracétique formé in situ par réaction entre l'acide acétique et le peroxyde d'hydrogène.

Le composé poly-époxy aliphatique obtenu par oxydation d'une double liaison peut être obtenu par oxydation d'un composé choisi parmi un furanne, un terpène ou une huile végétale insaturée.

La composition aqueuse d'encollage comprend au moins un durcisseur choisi parmi les composés comprenant au moins deux fonctions réactives choisies parmi les fonctions hydroxyle et acide carboxylique.

Le durcisseur est de préférence bio-sourcé.

De préférence, la composition d'encollage comprend un durcisseur ayant une masse molaire inférieure ou égale à 1000, de préférence inférieure ou égale à 750 et avantageusement inférieure ou égale à 500 g/mol.

Le durcisseur peut être choisi parmi :

- un polyol,
- un acide polycarboxylique.

Le durcisseur peut comprendre au moins un acide polycarboxylique, un sel ou anhydride de tel acide.

Le durcisseur est choisi parmi les acides organiques polycarboxyliques, les sels ou anhydrides de ces acides. Par " acide organique polycarboxylique ", on entend un acide organique comprenant au moins deux fonctions carboxyliques, de préférence au plus au plus 15 fonctions carboxyliques. L'acide organique polycarboxylique peut être un acide non polymérique ou polymérique, ramifié ou linéaire, saturé ou insaturé, non cyclique, acide alicyclique ou aromatique Il présente une masse molaire myenne en général inférieure ou égale à 50000, de préférence inférieure ou égale à 10000 et avantageusement inférieure ou égale à 5000.

L'acide polycarboxylique non polymérique ou monomère peut être un acide dicarboxylique, tricarboxylique ou tetracarboxylique.

Les acides dicarboxyliques préférés englobent, par exemple, l'acide 2,5-furandicarboxylique, l'acide oxalique, l'acide malonique, l'acide succinique, l'acide glutarique, l'acide malique, l'acide tartrique, l'acide tartronique, l'acide aspartique, l'acide glutamique, l'acide fumarique, l'acide itaconique, l'acide maléique, l'acide traumatique, l'acide mésaconique et l'acide citraconique.

D'autres acides dicarboxyliques pouvant éventuellement être utilisé englobe l'acide adipique, l'acide pimélique, l'acide subérique, l'acide azelaïque, l'acide sébacique, l'acide phtalique et ses dérivés notamment contenant au moins un atome de bore ou de chlore l'acide tétrahydrophtalique et ses dérivés, notamment contenant au moins un atome de chlore tel que l'acide chlorendique, l'acide isophtalique, l'acide téréphtalique.

Les acides tricarboxyliques englobent, par exemple l'acide citrique, l'acide tricarballylique, l'acide 1,2,4-butanetricarboxylique, l'acide aconitique, l'acide hémimellitique, l'acide triméllitique et l'acide trimésique.

On peut citer comme acide tétracarboxylique, par exemple l'acide 1,2,3,4-butanetétracarboxylique et l'acide pyroméllitique.

On utilise de préférence l'acide 2,5-furandicarboxylique, l'acide itaconique l'acide citrique, l'acide 1,2,3,4-butanetétracarboxylique.

A titre d'exemple d'acide organique polycarboxylique polymérique, on peut citer :

- les homopolymères d'acide carboxylique insaturé tel que l'acide (méth)acrylique, l'acide crotonique, l'acide isocrotonique, l'acide maléique, l'acide cinnamique, l'acide 2-méthylmaléique, l'acide fumarique, l'acide itaconique, l'acide 2-méthylitaconique, l'acide $\alpha,\beta$-méthyiènegiutarique, et
- les copolymères d'au moins un acide carboxylique insaturé précité

L'acide polycarboxylique est de préférence choisi parmi l'acide citrique, l'acide succinique, l'acide tartrique, l'acide maléique, l'acide itaconique, l'acide 1,2,3,4-butanetétracarboxylique, les homopolymères et copolymères d'acides maléiques, acryliques et itaconiques.

Le durcisseur peut être peut être un anhydride, notamment l'anhydride maléique, l'anhydride succinique ou l'anhydride phtalique.

De préférence, la composition d'encollage comprend à titre de durcisseur au moins un acide organique polycarboxylique non polymérique ayant une masse molaire en nombre inférieure ou égale à 1000, de préférence inférieure ou égale à 750 et avantageusement inférieure ou égale à 500 g/mol.

La composition aqueuse d'encollage comprenant un durcisseur choisi parmi les acides polycarboxyliques présente un pH inférieur à 7, de préférence inférieur à 5 ou compris entre 2 et 5.

Le durcisseur peut comprendre un polyol. Les polyols peuvent comporter de fonctions alcool primaire, secondaire ou tertiaire ou des mélanges.

De préférence, la composition d'encollage comprend à titre de durcisseur au moins un polyol ayant une masse molaire inférieure ou égale à 1000, de préférence inférieure ou égale à 750 et avantageusement inférieure ou égale à 500 g/mol.

Le polyol utilisé comme durcisseur peut être choisi parmi les composés aliphatiques ou aromatiques. De préférence, le polyol utilisé comme durcisseur est miscible ou soluble dans l'eau.

Le polyol peut être choisi parmi les sucres notamment les sucres réducteurs, les sucres non réducteurs, les sucres hydrogénés et leurs mélanges.

Le polyol peut être choisi parmi les monosaccharides, les oligosaccharides, linéaires, cycliques ou branchés.

De préférence, le polyol est choisi parmi :

- le glycérol,
- les polyglycérols,
- l'inositol,
- les sucres hydrogénés (tels que l'érythritol, l'arabitol, le xylitol, le sorbitol, le talitol, le mannitol, l'iditol, le maltitol, l'isomaltitol, le lactitol, le cellobitol, le palatinitol, le maltotriitol),
- le sorbitane et l'isosorbide,
- le butanediol et le propanediol,
- le produit d'hydrogénation d'un hydrolysat d'amidon, le produit d'hydrogénation d'un hydrolysat d'hémicellulose ou les polyols obtenus par fonctionnalisation d'une huile végétale,
- le saccarose,
- les sucres réducteurs tels que le glucose, le fructose, le maltose, le lactose, l'isomalt,
- le triméthylol propane, le pentaérythritol, le neopentylglycol.

De préférence, le durcisseur comprend au moins un polyol choisi parmi le saccarose, le glucose, le fructose, le lactose, l'isomalt, l'isosorbide ou le talitol, le sorbitane, l'inositol, le glycérol, l'érythritol, l'arabitol, le xylitol, le sorbitol, le mannitol, l'iditol, le maltitol, l'isomaltitol, le lactitol, le cellobitol, le palatinitol, le maltotritol, les produits d'hydrogénation d'hydrolysats d'amidon, le triméthylol propane et le pentaerythritol.

Le polyol peut également être choisi parmi les polyphénols d'origine naturelle. Dans ce cas, le durcisseur peut comprendre un polyol choisi parmi la lignine et ses dérivées, les lignanes, le lignosulfonate d'ammonium ou les sels de métal alcalin ou alcalino-terreux d'acide lignosulfonique, les acides tanniques, les tannins et les tannins condensés.

Le lignosulfonate d'ammonium est un sous-produit issu du traitement du bois pour la fabrication de la pâte à papier selon le procédé dit « au sulfite ». Le traitement de la pâte à papier par du sulfite d'ammonium ou du bisulfite d'ammonium permet d'obtenir des lignosulfonates d'ammonium.

Le lignosulfonate d'ammonium permet en outre de conférer à la composition d'encollage une bonne résistance au feu.

Les sels de métal alcalin ou alcalino-terreux d'acide lignosulfonique sont généralement des mélanges complexes de plusieurs acides lignosulfoniques sous forme salifiée, communément dénommés « lignosulfonates ». Les lignosulfonates sont des sous-produits issus du traitement du bois pour la fabrication de la pâte à papier selon le procédé « au sulfite » mentionné plus haut qui met en œuvre un sulfite ou un bisulfite. Selon la nature du contre-ion du sulfite ou du bisulfite employé, on obtient notamment des sels de métal alcalin ou alcalino-terreux d'acide lignosulfonique. Dans la présente invention, les sels de métal alcalin d'acide lignosulfonique préférés sont les lignosulfonates de sodium ou de potassium, avantageusement de sodium, et les sels de métal alcalino-terreux d'acide lignosulfonique préférés sont les lignosulfonates de magnésium ou de calcium.

Le polyol peut également être choisi parmi les polymères naturels polyhydroxylés tels que la gomme de xanthane, la pectine, le chitosan, l'amidon ou l'acide hyaluronique.

La composition aqueuse d'encollage comprenant un durcisseur choisi parmi les polyols présente un pH :

- supérieur 4, de préférence supérieur à 5 ou
- compris entre 4 et 12, de préférence compris entre 5 et 9.

La composition peut comprendre, en plus des composants a) et b), un catalyseur et/ou des additifs conventionnels.

La composition d'encollage peut comprendre en outre un catalyseur. Le catalyseur a pour fonction ajuster le profil de réticulation. Il permet par exemple d'augmenter la vitesse de réticulation ou de réduire la température de réticulation.

Le catalyseur peut être choisi parmi les bases et les acides de Lewis. Le catalyseur peut être de nature organique ou inorganique.

De préférence, on utilise un catalyseur lorsque le durcisseur est un polyol. Dans ce cas le catalyseur peut être un composé organique basique tel qu'une amine, un sel d'amine, un ammonium quaternaire ou un composé comprenant du phosphore.

Le catalyseur peut être choisi parmi les imidazoles, les imidazolines et leurs mélanges. A titre d'exemples d'imidazoles, on peut citer l'imidazole, le 1-méthylimidazole, le 2-méthylimidazole, le 2-phénylimidazole, le 2-éthyl-4-méthylimidazole et le 4,4'-méthylènebis(2-éthyl-5-méthylimidazole). A titre d'exemple d'imidazoline, on peut citer la 2-éthyl-N- phénylimidazoline. De préférence, on utilise le 2-méthylimidazole.

Le catalyseur peut être choisi parmi les sels métalliques tels que les sels de zinc.

La somme des proportions en poids du précurseur époxy (a), de durcisseur (b) représente en poids de l'extrait sec de la composition d'encollage, par ordre de préférence croissant, au moins 50 %, au moins 60 %, au moins 70 %, au moins 80 %, au moins 90 % au moins 95 % en poids de l'extrait sec de la composition d'encollage.

La composition d'encollage comprend, par ordre de préférence croissant, pour une partie en poids de durcisseur (b), 0,5 à 50 parties, 0,5 à 20 parties, 1,0 à 15 parties en poids de précurseur époxy (a).

La composition d'encollage comprend, par ordre de préférence croissant, pour 100 parties en poids de précurseur époxy (a) et de durcisseur (b), 0,1 à 5 parties, 0,5 à 3 parties, 0,5 à 2 parties en poids de catalyseur.

La composition d'encollage peut comprendre, par rapport au poids du précurseur époxy (a) et de durcisseur (b) :

- 10 à 90 % ou 20 à 80 % ou 30 à 70 % ou 40 à 60 % en poids de précurseur époxy (a), et
- 10 à 90 % ou 20 à 80 % ou 30 à 70 % ou 40 à 60 % en poids de durcisseur (b).

La composition d'encollage conforme à l'invention peut comprendre en outre des additifs conventionnels. Ces additifs ci-après dans les proportions suivantes calculées sur la base de 100 parties en poids de précurseur époxy (a) et de durcisseur (b) :

- de 0 à 5 parties de silane,
- de 0 à 40 parties, de préférence de 4 à 25 parties, d'une huile ou émulsion d'huile,
- de 0 à 5 parties d'un agent hydrophobe, en particulier une silicone,
- de 0 à 20 parties d'urée, de préférence 0 à 10 et mieux de 0 à 5 parties,
- de 0 à 40 parties, de préférence 0 à 20 parties d'une charge d'extension.

La composition d'encollage conforme à l'invention peut être constituée d'eau, du précurseur époxy choisi parmi les composés aliphatiques (a), du durcisseur (b), éventuellement du catalyseur et des additifs conventionnels.

La composition aqueuse d'encollage comprend au moins 40%, de préférence au moins 50% en poids d'eau par rapport au poids total de la composition aqueuse d'encollage.

Le rôle des additifs est connu et brièvement rappelé. Le silane est un agent de couplage entre les fibres et le liant, qui joue également le rôle d'agent anti-vieillissement. Les huiles sont des agents anti-poussières et des agents hydrophobes. L'urée joue le rôle de plastifiant. La charge d'extension est une charge organique ou inorganique soluble ou dispersible dans la composition d'encollage qui permet notamment de diminuer le coût de celle-ci.

L'agent hydrophobe est de préférence une silicone réactive. Par « silicone réactif », on entend un polyorganosiloxane portant au moins une fonction hydroxyle (silanol), carboxyle ou anhydride, amine, époxy ou vinylique apte à réagir avec l'un au moins des constituants de la composition d'encollage et/ou avec les groupes silanol de la surface du verre.

La silicone réactive est de préférence liquide à température ambiante. Sa masse molaire moyenne est généralement inférieure ou égale à 50 000, de préférence inférieure ou égale à 10 000. Le silicone réactif est constitué d'une chaîne principale composée de résidus d'organosiloxane, notamment d'alkylsiloxane, de préférence de diméthylsiloxane, et éventuellement de résidus de phénylsiloxane, notamment de méthylphénylsiloxane, en une proportion n'excédant de préférence pas 20%, notamment pas plus de 10 % en poids de motifs phénylsiloxane par rapport au poids du silicone. Ladite chaine principale porte au moins une fonction réactive hydroxyle, carboxyle ou anhydride, amine, epoxy ou vinylique en position terminale (sur l'une des extrémités libres de la chaine) ou sur un groupe pendant (ou greffon). De préférence, la silicone réactif comprend aux moins deux fonctions terminales, avantageusement des fonctions hydroxyles.

De préférence, la silicone réactive comprend une fonction réactive, avantageusement une fonction silanol, à chacune de ses extrémités de chaîne.

La fonction réactive de la silicone réactive peut être bloquée par un groupement protecteur qui libère ladite fonction réactive sous l'effet de la chaleur. La proportion de silicone réactive dans la composition d'encollage varie généralement de 0,1 à 5 parties, de préférence de 0,3 à 3 parties, avantageusement de 0,5 à 2,5 parties et mieux encore de 0,7 à 1,8 part en poids, pour 100 parties en poids de la somme des composants (a) et (b).

La préparation de la composition d'encollage est effectuée par simple mélange des constituants précités avec de l'eau.

La composition d'encollage est destinée à être appliquée sur des fibres minérales, notamment des fibres de verre ou de roche.

La présente invention a également pour objet un procédé de fabrication d'un produit isolant. Selon un mode de réalisation, le produit isolant est sous forme de laine minérale. Le procédé comporte en outre les étapes selon lesquelles :

- on forme des fibres minérales à partir d'une composition de matière minérale fondue, puis
- on applique une composition aqueuse d'encollage sur les fibres minérales, puis
- on collecte les fibres sous la forme d'une nappe, puis
- on soumet la nappe à un traitement thermique à une température supérieure à 150°C, de préférence de 180 à 220°C de façon à former un liant par durcissement thermique des composants non volatils de la composition d'encollage.

De manière classique, la composition d'encollage est projetée par pulvérisation sur les fibres minérales dans la hotte de réception des fibres se trouvant à la sortie du dispositif centrifuge et avant l'organe récepteur permettant la collecte des fibres sur sous la forme d'une nappe de fibres qui est ensuite traitée à une température permettant la réticulation de l'encollage et la formation d'un liant infusible.

Dans un mode de réalisation, le procédé de la présente invention comprend par conséquent une étape de préparation de la composition aqueuse d'encollage, comprenant le mélange du précurseur, du durcisseur, du catalyseur et des éventuels additifs avant l'étape d'application sur les fibres.

La composition d'encollage présente une durée d'utilisation (« pot-life »), au moins supérieure à 5 minutes, de préférence supérieure à 1 heure, mieux de quelques heures à quelque jours.

La composition d'encollage est exempte de formaldéhyde et/ou de bisphénol notamment de bisphénol A.

Le liant obtenu par durcissement de la composition d'encollage est une résine époxy. Ces résines époxy présentent une température de transition vitreuse pouvant être comprise entre 0 et 150 °C.

Les produits isolants obtenus par le procédé selon l'invention à partir de ces fibres encollées constituent aussi un objet de la présente invention.

Les produits isolants peuvent être des produits isolants acoustiques et/ou thermiques.

Les fibres minérales sont choisies parmi des fibres de verre ou des fibres de roche.

Les fibres minérales et le liant représentent, par ordre de préférence croissant au moins 95 %, au moins 98 %, au moins 99%, en poids du poids du produit isolant.

Les fibres minérales et le liant peuvent être sous forme de laine minérale. Dans ce cas les produits isolants sont sous forme de laine minérale. Ils se présentent généralement sous la forme d'un matelas, d'une nappe ou d'un feutre de laine minérale, de verre ou de roche.

Le poids total de liant représente 0,5 à 15 % du poids total des fibres minérales, de préférence 1 à 12 % et mieux 2 à 6 %.

Les fibres minérales et le liant peuvent être sous forme d'un voile comprenant des fibres minérales encollées. Dans ce cas les produits isolants sont sous forme d'un voile de fibres minérales, également de verre ou de roche.

Le voile peut également être destiné à former un revêtement de surface dudit matelas, nappe ou feutre.

## Exemples

Les composés utilisés pour préparer les compositions d'encollage sont listés dans le tableau ci-dessous.

| Composés | Nature | Nom |
|---|---|---|
| Précurseur | Ether polyglycidylique du glycérol | PGG |
| | Ether polyglycidylique d'isosorbide | PGI |

(suite)

| Composés | Nature | Nom |
|---|---|---|
| **Durcisseur** | Polyacide : Acide citrique | CA |
| | Polyol : Saccharose | SA |
| | Polyol : Sorbitol | SO |
| | Polyol : Maltitol | MA |
| | Polyol : Erithritol | ER |
| | Polyol : Trimethylol propane | TR |
| | Polyamine : tétraéthylènetétraamine | TETA |
| | Polyamine : Polyamine cycloaliphatique | DEH 2132 |
| | Acide aminé : Lysine | LYS |
| **Catalyseur** | Aminé : 2-méthylimidazole | Cat |

Compositions d'encollage

Les compositions d'encollage sont préparées en introduisant, dans un récipient, de l'eau, le précurseur, le durcisseur et éventuellement le catalyseur sous une agitation vigoureuse jusqu'à obtention d'une solution homogène.

Les compositions d'encollage testées et leurs propriétés sont résumées dans le tableau ci-dessous. Les proportions indiquées sont exprimés en parties pondérales.

Détermination de la stabilité au stockage ou « Pot life »

Les compositions d'encollage présentant extrait sec de 30% sont stockées dans des pots en verre de 250 ml à une température de 25 °C.

La stabilité au stockage est déterminée en évaluant le durée au bout de laquelle un gel se forme.

Détermination des températures de réticulation

Un rectangle de 55 mm x 6 mm découpé dans un filtre de microfibres en verre non liées (Whatman, référence 1822-150) est imprégné avec environ 300 mg de chacune de ces compositions d'encollage.

On introduit ces rectangles imprégnés dans un appareil d'analyse mécanique dynamique, on augmente progressivement (4 °C/minute) la température du porte-échantillon en partant de 25 °C jusqu'à 250 °C, en mesurant en continu le module de conservation (E') en flexion à 3 points (fréquence de 1 Hz, déformation de 0,1 %).

Abréviations utilisées

ES : Extrait sec de la composition.
PE/D : Rapport en poids du précurseur époxy sur le durcisseur.
Cat. : % en poids de catalyseur par rapport au poids de précurseur (a) et de durcisseur (b),
Formation d'un gel : « Pot life », durée à partir de laquelle un gel se forme;
TR : Température de réticulation en °C.
Tg : Température de transition vitreuse en °C mesurée par DSC (« Differential Scanning Calorimetry ») avec une rampe de 2°C/min.
Vis : Viscosité en Pa.s mesurée à l'aide d'un viscosimètre Brookfield à 20 °C sur des compositions d'encollage présentant en extrait sec de 70 %.

| | | ES (%) | PE/D | Cat.% | TR | Tg | Vis. | pH | Formation d'un gel |
|---|---|---|---|---|---|---|---|---|---|
| Ex. Comp.1 | PGI /TETA | 30 | 6,5/1 | 0 | **50** | 76 | - | - | Moins d'1 h |
| Ex. Comp.2 | PGI /DEH | 30 | 1,6/1 | 0 | **84** | 42,7 | - | 12 | Moins d'1 h |

(suite)

|  |  | ES (%) | PE/D | Cat.% | TR | Tg | Vis. | pH | Formation d'un gel |
|---|---|---|---|---|---|---|---|---|---|
| Ex. Comp.3 | PGI /LYS | 30 | 5,4/1 | 0 | **35** | 44 | - | 7 | Moins d'1 h |
| Ex. Comp.4 | PGG /TETA | 30 | 5,8/1 | 0 | **50** | 54 | - | - | Moins d'1 h |
| Ex. Comp.5 | PGG /DEH | 30 | 1,4/1 | 0 | **20** | 53 | - | 11 | Moins d'1 h |
| Ex.1 | PGI /CA | 30 | 1,4/1 | 0 | 105 | 90 | 0,12 | < 3 | > 1 semaine |
| Ex.2 | PGI /MA/Cat | 30 | 4/1 | 1 | 135 | 65 | 0,04 | 9 | > 1 jour |
| Ex.3 | PGI /SO/Cat | 30 | 10/1 | 1 | 125 | 53 | 0,03 | 9 | > 1 jour |
| Ex.4 | PGI /SA/Cat | 30 | 3,6/1 | 1 | 130 | 58 | 0,04 | 9 | > 1 jour |
| Ex.5 | PGI /ER/Cat | 30 | 30/1 | 1 | 125 | 60 | - | 9 | > 1 jour |
| Ex.6 | PGI /TR/Cat | 30 | 10/1 | 1 | 125 | 37 | - | 9 | > 1 jour |
| Ex.7 | PGI /TR/Cat | 30 | 30/1 | 1 | 125 | 30 | - | 9 | > 1 jour |
| Ex.8 | PGG /CA | 30 | 0,9/1 | 0 | 175 | 96 | 0,12 | < 3 | > 1 semaine |
| Ex.9 | PGG /MA | 30 | 1,5/1 | 5 | 95 | 36 | 0,08 | 9 | > 1 jour |
| Ex.10 | PGG /SO | 30 | 4,7/1 | 5 | 100 | 23 | 0,03 | 9 | > 1 jour |

Les exemples comparatifs montrent que les précurseurs aliphatiques époxydés régissent avec les durcisseurs polyaminés à des températures inférieures à 90°C. Leur utilisation est donc incompatible avec les applications visées.

Les compositions d'encollages selon l'invention ont avantageusement une température de réticulation supérieure à 90°, voire supérieure à 100 °C et inférieure à 200 °C. De telles températures sont :

- suffisamment élevées pour éviter toute risque de pré-réticulation ou gélification avant injection et
- suffisamment faibles pour que le cout énergétique de l'étape de durcissement de la composition d'encollage soit modéré, voir faible.

Cela se traduit par des températures inférieures à 200°C, voire inférieures à 150°C et/ou des vitesses de réticulation rapides.

Les compositions d'encollage présentent une faible viscosité peu importe la nature du durcisseur.

Les compositions d'encollage comprenant un durcisseur de type polyol présentent toutes un pH basic à neutre (Ex.3 à 6).

Produits isolants

Les compositions d'encollage ont ensuite été évaluées comme liant sur des textiles tissés de fibres de verre. Le textile est imprégné de composition d'encollage et réticulé dans un four ventilé pendant 2 minutes à 215°C. Ces essais prouvent que les compositions liantes développées sont satisfaisantes pour lier des composites à base de fibres de verre.

Les forces de rupture des textiles tissés ainsi revêtus avant et après vieillissement ont été déterminées. Ce test consiste à mesurer la force à la rupture d'une toile de verre imprégné de liant. Les résultats sont reportés dans le tableau ci-dessous. Il ressort que les propriétés mécaniques sont suffisantes. Les produits isolants à base de fibres minérales liés par un liant résultant de la réticulation des compositions d'encollage selon l'invention sont satisfaisants.

|  | **Fmax Avant vieillissement (N)** | **Fmax après vieillissement (N)** |
|---|---|---|
| Ex.8 : PGG/CA | 47 | 40 |
| Ex.1 : PGI/CA | 50 | 35 |
| Ex.4 : PGI/ SA | 45 | 33 |
| Ex.3 : PGI/ SO | 44 | 54 |

**Revendications**

1. Produit isolant comprenant des fibres minérales et un liant obtenu par durcissement d'une composition d'encollage comprenant comme composants :

   a) des composés comprenant au moins une fonction époxy dont au moins un précurseur époxy choisi parmi les composés aliphatiques comprenant au moins deux fonctions époxy, les composés aliphatiques comprenant au moins deux fonctions époxy représentent au moins 50 % du poids total des composés comprenant au moins une fonction époxy de la composition d'encollage,
   b) un durcisseur choisi parmi les composés comprenant au moins deux fonctions réactives choisies parmi les fonctions hydroxyle et acide carboxylique, la ou les fonctions acides carboxyliques pouvant être sous forme de sel ou d'anhydride.

2. Produit isolant selon la revendication 1 **caractérisé en ce que** les fibres minérales sont choisies parmi des fibres de verre ou des fibres de roche.

3. Produit isolant selon la revendication 1 ou 2 **caractérisé en ce que** les fibres minérales et le liant représentent au moins 95 % en poids du poids du produit isolant.

4. Produit isolant selon l'une quelconque des revendications 1 à 3, **caractérisé en ce que** les fibres minérales et le liant sont sous forme de laine minérale.

5. Produit isolant selon l'une quelconque des revendications 1 à 3, **caractérisé en ce que** le poids total de liant représente 0,5 à 15 % du poids total des fibres minérales, de préférence 1 à 12 % et mieux 2 à 6 %.

6. Produit isolant selon l'une quelconque des revendications précédentes **caractérisée en ce que** le composé aliphatique comprenant au moins deux fonctions époxy est choisi parmi :

   - un éther polyglycidylique d'un polyol aliphatique,
   - un composé poly-époxy aliphatique obtenu par oxydation d'un composé comprenant au moins deux doubles liaisons.

7. Produit isolant selon la revendication précédente **caractérisée en ce que** l'éther polyglycidylique d'un polyol aliphatique est choisi parmi :

   - un éther polyglycidylique de glycérol, un éther polyglycidylique de polyglycérol, un éther polyglycidylique d'inositol, un éther polyglycidylique d'érythritol, un éther polyglycidylique d'arabitol, un éther polyglycidylique de xylitol, un éther polyglycidylique de talitol, un éther polyglycidylique de sorbitol, un éther polyglycidylique de mannitol, un éther polyglycidylique d'iditol, un éther polyglycidylique de maltitol, un éther polyglycidylique d'isomaltitol, un éther polyglycidylique de lactitol, un éther polyglycidylique de cellobitol, un éther polyglycidylique de palatinitol, un éther polyglycidylique de maltotriitol, un éther polyglycidylique d'isosorbide, un éther polyglycidylique de sorbitane, un éther polyglycidylique de butanediol, un éther polyglycidylique de propanediol, un éther polyglycidylique de saccarose, un éther polyglycidylique de glucose, un éther polyglycidylique de fructose, un éther polyglycidylique de maltose, un éther polyglycidylique de lactose, un éther polyglycidylique d'isomalt, un éther polyglycidylique de triméthylol propane, un éther polyglycidylique de penta érythritol, un éther polyglycidylique de néopentylglycol.
   - un éther polyglycidylique d'un polyol obtenu par fonctionnalisation d'une huile végétale, et
   - un éther polyglycidylique des produits d'hydrogénation d'hydrolysats d'amidon ou d'hémicellulose.

8. Produit isolant selon la revendication 6 **caractérisée en ce que** le composé poly-époxy aliphatique obtenu par oxydation d'une double liaison est obtenu par oxydation d'un composé choisi parmi un furanne, un terpène ou une huile végétale insaturée.

9. Produit isolant selon l'une quelconque des revendications précédentes, **caractérisée en ce que** le durcisseur comprend au moins un acide polycarboxylique, un sel ou anhydride de tel acide.

10. Produit isolant selon la revendication précédente, **caractérisé en ce que** l'acide polycarboxylique est choisi parmi l'acide citrique, l'acide succinique, l'acide tartrique, l'acide maléique, l'acide itaconique, l'acide 1,2,3,4-butanetétracarboxylique, les homopolymères et copolymères d'acides maléiques, acryliques et itaconiques.

11. Produit isolant selon l'une des revendications précédentes, **caractérisé en ce que** le durcisseur comprend au moins un polyol choisi parmi le saccarose, le glucose, le fructose, le lactose, l'isomalt, l'isosorbide ou le talitol, le sorbitane, l'inositol, le glycérol, l'érythritol, l'arabitol, le xylitol, le sorbitol, le mannitol, l'iditol, le maltitol, l'isomaltitol, le lactitol, le cellobitol, le palatinitol, le maltotritol, les produits d'hydrogénation d'hydrolysats d'amidon ou d'hémicellulose, le triméthylol propane et le pentaerythritol.

12. Produit isolant selon l'une des revendications précédentes, **caractérisé en ce que** le durcisseur comprend au moins un polyol choisi parmi la lignine et ses dérivées, les lignanes, le lignosulfonate d'ammonium ou les sels de métal alcalin ou alcalino-terreux d'acide lignosulfonique, les acides tanniques, les tannins et les tannins condensés.

13. Produit isolant selon l'une quelconque des revendications précédentes, **caractérisée en ce que** la composition comprend en outre un catalyseur et/ou des additifs conventionnels.

14. Produit isolant selon l'une quelconque des revendications précédentes, **caractérisée en ce que** la somme des proportions en poids du précurseur époxy (a), de durcisseur (b) représente au moins 50 %, de préférence au moins 95 % en poids de l'extrait sec de la composition d'encollage.

15. Produit isolant selon l'une quelconque des revendications précédentes, **caractérisée** en ce la composition d'encollage comprend 0,5 à 50 parties en poids de précurseur époxy (a) pour une partie en poids de durcisseur (b).

16. Composition d'encollage aqueuse pour produits isolants à base de fibres minérales comprenant comme composants autres que l'eau :

a) des composés comprenant au moins une fonction époxy dont au moins un précurseur époxy choisi parmi les composés aliphatiques comprenant au moins deux fonctions époxy, les composés aliphatiques comprenant au moins deux fonctions époxy représentent au moins 50 % du poids total des composés comprenant au moins une fonction époxy de la composition d'encollage,
b) un durcisseur choisi parmi les composés comprenant au moins deux fonctions réactives choisies parmi les fonctions hydroxyle et acide carboxylique, la ou les fonctions acides carboxyliques pouvant être sous forme de sel ou d'anhydride.

17. Composition aqueuse d'encollage selon la revendication précédente, **caractérisée en ce que** le précurseur époxy est soluble ou miscible dans l'eau.

18. Composition aqueuse d'encollage selon l'une quelconque des revendications 16 à 17, **caractérisée en ce que** les composants (a) et (b) présentent une température de réticulation déterminée par analyse mécanique dynamique avec une vitesse de chauffage de 4°C/min supérieure ou égale à 90°C.

19. Procédé de fabrication d'un produit isolant comprenant des fibres minérales et un liant selon lequel :

- on applique une composition aqueuse d'encollage selon l'une quelconque des revendications 16 à 18 sur les fibres minérales,
- on forme un liant par durcissement thermique des composants non volatils de la composition d'encollage.

20. Procédé de fabrication d'un produit isolant selon l'une quelconque des revendications 1 à 15, **caractérisé en ce que** le produit isolant est sous forme de laine minérale, le procédé comporte en outre les étapes selon lesquelles :

- on forme des fibres minérales à partir d'une composition de matière minérale fondue, puis
- on applique une composition aqueuse d'encollage sur les fibres minérales, puis
- on collecte les fibres sous la forme d'une nappe, puis
- on soumet la nappe à un traitement thermique à une température supérieure à 150°C, de préférence de 180 à 220°C de façon à former un liant par durcissement thermique des composants non volatils de la composition d'encollage.

**Patentansprüche**

1. Isolierprodukt, umfassend Mineralfasern und ein Bindemittel, das durch Aushärten einer Schlichtezusammensetzung erhalten wird, die als Komponenten umfasst:

   a) Verbindungen, die mindestens eine Epoxyfunktion umfassen, von denen mindestens eine Epoxyvorstufe ausgewählt ist aus aliphatischen Verbindungen, die mindestens zwei Epoxyfunktionen umfassen, wobei die aliphatischen Verbindungen, die mindestens zwei Epoxyfunktionen umfassen, mindestens 50 % des Gesamtgewichts der Verbindungen der Schlichtezusammensetzung ausmachen, die mindestens eine Epoxyfunktion umfassen,
   b) einen Härter, der aus Verbindungen ausgewählt ist, die mindestens zwei reaktive Funktionen umfassen, die aus Hydroxyl- und Carbonsäurefunktionen ausgewählt sind, wobei die Carbonsäurefunktion(en) in Form von Salz oder Anhydrid vorliegen kann/können.

2. Isolierprodukt nach Anspruch 1, **dadurch gekennzeichnet, dass** die Mineralfasern aus Glasfasern oder Gesteinsfasern ausgewählt sind.

3. Isolierprodukt nach Anspruch 1 oder 2, **dadurch gekennzeichnet, dass** die Mineralfasern und das Bindemittel mindestens 95 Gewichts-% des Gewichts des Isolierprodukts ausmachen.

4. Isolierprodukt nach einem der Ansprüche 1 bis 3, **dadurch gekennzeichnet, dass** die Mineralfasern und das Bindemittel in Form von Mineralwolle vorliegen.

5. Isolierprodukt nach einem der Ansprüche 1 bis 3, **dadurch gekennzeichnet, dass** das Gesamtgewicht des Bindemittels 0,5 bis 15 %, vorzugsweise 1 bis 12 % und besser 2 bis 6 % des Gesamtgewichts der Mineralfasern ausmacht.

6. Isolierprodukt nach einem der vorstehenden Ansprüche, **dadurch gekennzeichnet, dass** die aliphatische Verbindung, die mindestens zwei Epoxyfunktionen umfasst, ausgewählt ist aus:

   - einem Polyglycidylether eines aliphatischen Polyols,
   - einer aliphatischen Polyepoxyverbindung, die durch Oxidation einer Verbindung mit mindestens zwei Doppelbindungen erhalten wird.

7. Isolierprodukt nach dem vorstehenden Anspruch, **dadurch gekennzeichnet, dass** der Polyglycidylether eines aliphatischen Polyols ausgewählt ist aus:

   - einem Glycerinpolyglycidylether, einem Polyglycerinpolyglycidylether, einem Inositolpolyglycidylether, einem Erythritolpolyglycidylether, einem Arabitolpolyglycidylether, einem Xylitolpolyglycidylether, einem Talitolpolyglycidylether, einem Sorbitolpolyglycidylether, einem Mannitolpolyglycidylether, einem Iditolpolyglycidylether, einem Maltitolpolyglycidylether, einem Isomaltitolpolyglycidylether, einem Lactitolpolyglycidylether, einem Celobitolpolyglycidylether, einem Palatinitolpolyglycidylether, einem Maltotriitolpolyglycidylether, einem Isosorbidpolyglycidylether, einem Sorbitanpolyglycidylether, einem Butandiolpolyglycidylether, einem Propandiolpolyglycidylether, einem Saccharosepolyglycidylether, einem Glucosepolyglycidylether, einem Fructosepolyglycidylether, einem Maltosepolyglycidylether, einem Lactosepolyglycidylether, einem Isomaltpolyglycidylether, einem Trimethylolpropanpolyglycidylether, einem Pentaerythritolpolyglycidylether, einem Neopentylglycolpolyglycidylether.
   - einem Polyglycidylether eines Polyols, das durch Funktionalisierung eines Pflanzenöls erhalten wird, und
   - einem Polyglycidylether der Hydrierungsprodukte von Stärke- oder Hemicellulosehydrolysaten.

8. Isolierprodukt nach Anspruch 6, **dadurch gekennzeichnet, dass** die durch Oxidation einer Doppelbindung erhaltene aliphatische Polyepoxyverbindung durch Oxidation einer Verbindung erhalten wird, die aus einem Furan, einem Terpen oder einem ungesättigten Pflanzenöl ausgewählt ist.

9. Isolierprodukt nach einem der vorstehenden Ansprüche, **dadurch gekennzeichnet, dass** der Härter mindestens eine Polycarbonsäure, ein Salz oder Anhydrid einer solchen Säure umfasst.

10. Isolierprodukt nach dem vorstehenden Anspruch, **dadurch gekennzeichnet, dass** die Polycarbonsäure ausgewählt ist aus Zitronensäure, Bernsteinsäure, Weinsäure, Maleinsäure, Itaconsäure, 1,2,3,4-Butantetracarbonsäure, Homopolymeren und Copolymeren von Malein-, Acryl- und Itaconsäure.

11. Isolierprodukt nach einem der vorstehenden Ansprüche, **dadurch gekennzeichnet, dass** der Härter mindestens ein Polyol umfasst, das ausgewählt ist aus Saccharose, Glucose, Fructose, Lactose, Isomalt, Isosorbid oder Talitol, Sorbitan, Inositol, Glycerin, Erythritol, Arabitol, Xylitol, Sorbitol, Mannitol, Iditol, Maltitol, Isomaltitol, Lactitol, Cellobitol, Palatinitol, Maltotritol, Hydrierungsprodukten von Stärke- oder Hemicellulosehydrolysaten, Trimethylolpropan und Pentaerythritol.

12. Isolierprodukt nach einem der vorstehenden Ansprüche, **dadurch gekennzeichnet, dass** der Härter mindestens ein Polyol umfasst, das ausgewählt ist aus Lignin und seinen Derivaten, Lignanen, Ammoniumlignosulfonat oder den Alkalimetall- oder Erdalkalimetallsalzen von Lignosulfonsäure, Gerbsäuren, Tanninen und kondensierten Tanninen.

13. Isolierprodukt nach einem der vorstehenden Ansprüche, **dadurch gekennzeichnet, dass** die Zusammensetzung ferner einen Katalysator und/oder herkömmliche Zusatzstoffe enthält.

14. Isolierprodukt nach einem der vorstehenden Ansprüche, **dadurch gekennzeichnet, dass** die Summe der Gewichtsanteile der Epoxyvorstufe (a), von Härter (b), mindestens 50 Gewichts-%, vorzugsweise mindestens 95 Gewichts-%, der Trockenmasse der Schlichtezusammensetzung ausmacht.

15. Isolierprodukt nach einem der vorstehenden Ansprüche, **dadurch gekennzeichnet, dass** die Schlichtezusammensetzung 0,5 bis 50 Gewichtsteile der Epoxyvorstufe (a) für einen Gewichtsteil Härter (b) umfasst.

16. Wässrige Schlichtezusammensetzung für Isolierprodukte auf Mineralfaserbasis, die als andere Komponenten als Wasser umfasst:

   a) Verbindungen, die mindestens eine Epoxyfunktion umfassen, von denen mindestens eine Epoxyvorstufe ausgewählt ist aus aliphatischen Verbindungen, die mindestens zwei Epoxyfunktionen umfassen, wobei die aliphatischen Verbindungen, die mindestens zwei Epoxyfunktionen umfassen, mindestens 50 % des Gesamtgewichts der Verbindungen der Schlichtezusammensetzung ausmachen, die mindestens eine Epoxyfunktion umfassen,
   b) einen Härter, der aus Verbindungen ausgewählt ist, die mindestens zwei reaktive Funktionen umfassen, die aus Hydroxyl- und Carbonsäurefunktionen ausgewählt sind, wobei die Carbonsäurefunktion(en) in Form von Salz oder Anhydrid vorliegen kann/können.

17. Wässrige Schlichtezusammensetzung nach dem vorstehenden Anspruch, **dadurch gekennzeichnet, dass** die Epoxyvorstufe in Wasser löslich oder mischbar ist.

18. Wässrige Schlichtezusammensetzung nach einem der Ansprüche 16 bis 17, **dadurch gekennzeichnet, dass** die Komponenten (a) und (b) eine Vernetzungstemperatur aufweisen, die durch dynamisch-mechanische Analyse mit einer Erwärmungsrate von 4 °C/min bestimmt wird, die größer als oder gleich 90 °C ist.

19. Verfahren zur Herstellung eines Isolierprodukts, umfassend Mineralfasern und ein Bindemittel, gemäß dem:

   - eine wässrige Schlichtezusammensetzung nach einem der Ansprüche 16 bis 18 auf die Mineralfasern aufgebracht wird,
   - ein Bindemittel durch thermische Härtung der nichtflüchtigen Komponenten der Schlichtezusammensetzung gebildet wird.

20. Verfahren zur Herstellung eines Isolierprodukts nach einem der Ansprüche 1 bis 15, **dadurch gekennzeichnet, dass** das Isolierprodukt in Form von Mineralwolle vorliegt, wobei das Verfahren ferner die Schritte umfasst, gemäß denen:

   - Mineralfasern ausgehend von einer geschmolzenen Mineralstoffzusammensetzung gebildet werden, danach
   - eine wässrige Schlichtezusammensetzung auf die Mineralfasern aufgetragen wird, danach
   - die Fasern in Form einer Bahn gesammelt werden, danach
   - die Bahn einer thermischen Behandlung bei einer Temperatur von mehr als 150 °C, vorzugsweise 180 bis 220 °C, unterzogen wird, sodass durch thermische Härtung der nichtflüchtigen Komponenten der Schlichtezusammensetzung ein Bindemittel gebildet wird.

**Claims**

1. An insulation product comprising mineral fibers and a binder obtained by curing a binding compound comprising as components:

   a) compounds comprising at least one epoxy function, including at least one epoxy precursor chosen from aliphatic compounds comprising at least two epoxy functions, the aliphatic compounds comprising at least two epoxy functions representing at least 50% of the total weight of the compounds comprising at least one epoxy function of the binding compound,
   b) a hardener chosen from compounds comprising at least two reactive functions chosen from hydroxyl and carboxylic acid functions, it being possible for the carboxylic acid function(s) to be in salt or anhydride form.

2. The insulation product as claimed in claim 1, **characterized in that** the mineral fibers are chosen from glass fibers or rock fibers.

3. The insulation product as claimed in claim 1 or 2, **characterized in that** the mineral fibers and the binder represent at least 95% by weight of the weight of the insulation product.

4. The insulation product as claimed in any one of claims 1 to 3, **characterized in that** the mineral fibers and the binder are in the form of mineral wool.

5. The insulation product as claimed in any one of claims 1 to 3, **characterized in that** the total weight of binder represents 0.5 to 15% of the total weight of the mineral fibers, preferably 1 to 12% and better still 2 to 6%.

6. The insulation product as claimed in any one of the preceding claims, **characterized in that** the aliphatic compound comprising at least two epoxy functions is chosen from:

   - a polyglycidyl ether of an aliphatic polyol,
   - an aliphatic polyepoxy compound obtained by oxidation of a compound comprising at least two double bonds.

7. The insulation product as claimed in the preceding claim, **characterized in that** the polyglycidyl ether of an aliphatic polyol is chosen from:

   - a polyglycidyl ether of glycerol, a polyglycidyl ether of polyglycerol, a polyglycidyl ether of inositol, a polyglycidyl ether of erythritol, a polyglycidyl ether of arabitol, a polyglycidyl ether of xylitol, a polyglycidyl ether of talitol, a polyglycidyl ether of sorbitol, a polyglycidyl ether of mannitol, a polyglycidyl ether of iditol, a polyglycidyl ether of maltitol, a polyglycidyl ether of isomaltitol, a polyglycidyl ether of lactitol, a polyglycidyl ether of cellobitol, a polyglycidyl ether of palatinitol, a polyglycidyl ether of maltotriitol, a polyglycidyl ether of isosorbide, a polyglycidyl ether of sorbitan, a polyglycidyl ether of butanediol, a polyglycidyl ether of propanediol, a polyglycidyl ether of sucrose, a polyglycidyl ether of glucose, a polyglycidyl ether of fructose, a polyglycidyl ether of maltose, a polyglycidyl ether of lactose, a polyglycidyl ether of isomalt, a polyglycidyl ether of trimethylol propane, a polyglycidyl ether of pentaerythritol, and a polyglycidyl ether of neopentyl glycol,
   - a polyglycidyl ether of a polyol obtained by functionalization of a vegetable oil, and
   - a polyglycidyl ether of starch hydrolysate hydrogenation products or hemicellulose hydrolysate hydrogenation products.

8. The insulation product as claimed in claim 6, **characterized in that** the aliphatic polyepoxy compound obtained by oxidation of a double bond is obtained by oxidation of a compound chosen from a furan, a terpene or an unsaturated vegetable oil.

9. The insulation product as claimed in any one of the preceding claims, **characterized in that** the hardener comprises at least one polycarboxylic acid, or a salt or anhydride of such acid.

10. The insulation product as claimed in the preceding claim, **characterized in that** the polycarboxylic acid is chosen from citric acid, succinic acid, tartaric acid, maleic acid, itaconic acid, 1,2,3,4-butanetetracarboxylic acid, and homopolymers and copolymers of maleic acid, acrylic acid and itaconic acid.

11. The insulation product as claimed in one of the preceding claims, **characterized in that** the hardener comprises at least one polyol chosen from sucrose, glucose, fructose, lactose, isomalt, isosorbide or talitol, sorbitan, inositol, glycerol, erythritol, arabitol, xylitol, sorbitol, mannitol, iditol, maltitol, isomaltitol, lactitol, cellobitol, palatinitol, maltotriitol, starch hydrolysate hydrogenation products or hemicellulose hydrolysate hydrogenation products, trimethylol propane and pentaerythritol.

12. The insulation product as claimed in one of the preceding claims, **characterized in that** the hardener comprises at least one polyol chosen from lignin and its derivatives, lignans, ammonium lignosulfate or the alkali or alkaline-earth metal salts of lignosulfonic acid, tannic acids, tannins and condensed tannins.

13. The insulation product as claimed in any one of the preceding claims, **characterized in that** the composition also comprises a catalyst and/or conventional additives.

14. The insulation product as claimed in any one of the preceding claims, **characterized in that** the sum of the proportions by weight of the epoxy precursor (a) and of hardener (b) represents at least 50%, preferably at least 95% by weight of the solids of the binding compound.

15. The insulation product as claimed in any one of the preceding claims, **characterized in that** the binding compound comprises 0.5 to 50 parts by weight of epoxy precursor (a) for one part by weight of hardener (b).

16. An aqueous binding compound for insulation products based on mineral fibers, comprising as components other than water:

a) compounds comprising at least one epoxy function, including at least one epoxy precursor chosen from aliphatic compounds comprising at least two epoxy functions, the aliphatic compounds comprising at least two epoxy functions representing at least 50% of the total weight of the compounds comprising at least one epoxy function of the binding compound,
b) a hardener chosen from compounds comprising at least two reactive functions chosen from hydroxyl and carboxylic acid functions, it being possible for the carboxylic acid function(s) to be in salt or anhydride form.

17. The aqueous binding compound as claimed in the preceding claim, **characterized in that** the epoxy precursor is water-soluble or water-miscible.

18. The aqueous binding compound as claimed in either one of claims 16 and 17, **characterized in that** the components (a) and (b) have a crosslinking temperature determined by dynamic mechanical analysis with a heating rate of 4°C/min of greater than or equal to 90°C.

19. A process for manufacturing an insulation product comprising mineral fibers and a binder, wherein:

- an aqueous binding compound as claimed in any one of claims 16 to 18 is applied to the mineral fibers,
- a binder is formed by thermal curing of the nonvolatile components of the binding compound.

20. A process for manufacturing an insulation product as claimed in any one of claims 1 to 15, **characterized in that** the insulation product is in the form of mineral wool, the process also comprising the steps wherein:

- mineral fibers are formed from a composition of molten mineral matter, then
- an aqueous binding compound is applied to the mineral fibers, then
- the fibers are collected in the form of a web, then
- the web is subjected to a heat treatment at a temperature of greater than 150°C, preferably from 180 to 220°C so as to form a binder by thermal curing of the nonvolatile components of the binding compound.

**Fig. 1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0369848 A
- WO 2004007395 A
- WO 2005044750 A
- WO 03104284 A2
- GB 1210098 A
- WO 2015033084 A1